# EUROPÄISCHE PATENTSCHRIFT

(11) **EP 3 631 186 B1**
(45) Veröffentlichungstag und Bekanntmachung des Hinweises auf die Patenterteilung: **03.08.2022**
(21) Anmeldenummer: 18726964.2
(22) Anmeldetag: 22.05.2018
(51) Int. Cl.: F02D 41/14, F02D 41/22

(54) **VERFAHREN ZUR DIAGNOSE EINER BRENNKRAFTMASCHINE EINES KRAFTFAHRZEUGES, SOWIE DER MIT DER BRENNKRAFTMASCHINE VERBUNDENEN VORRICHTUNGEN, SOWIE EIN SYSTEM ZUR DURCHFÜHRUNG DES VERFAHRENS**
METHOD FOR THE DIAGNOSIS OF AN INTERNAL COMBUSTION ENGINE OF A MOTOR VEHICLE, AND OF THE DEVICES CONNECTED TO THE INTERNAL COMBUSTION ENGINE, AND SYSTEM FOR CARRYING OUT THE METHOD.
PROCÉDÉ DE DIAGNOSTIC D'UN MOTEUR À COMBUSTION INTERNE D'UN VÉHICULE AUTOMOBILE ET DES DISPOSITIFS ASSOCIÉS AU MOTEUR À COMBUSTION INTERNE ET SYSTEME DE MISE EN UVRE DU PROCÉDÉ

(30) Priorität: 24.05.2017 DE 102017208858; 30.06.2017 DE 102017211220
(43) Veröffentlichungstag der Anmeldung: 08.04.2020
(73) Patentinhaber: Robert Bosch GmbH, 70442 Stuttgart (DE)
(72) Erfinder: MOUIL SIL, Ghislain, 70825 Korntal-Muenchingen (DE); SCHLASZA, Christian, 73728 Esslingen (DE); DZEKO, Sani, 60385 Frankfurt A. M. (DE); HAAGA, Gerhard, 73275 Ohmden (DE); DOERR, Alfons, 70597 Stuttgart (DE); ENGST, Markus, 71277 Rutesheim (DE); HACKNER, Michael, 73650 Winterbach (DE); VIEHMANN, Christian, 73669 Lichtenwald (DE)
(86) Internationale Anmeldenummer: PCT/EP2018/063332
(87) Internationale Veröffentlichungsnummer: WO 2018/215430

(56) Entgegenhaltungen:
- WO-A2-02/14828
- WO-A2-02/095376

## Beschreibung

### Stand der Technik

Die Erfindung betrifft ein Verfahren zur Diagnose einer Brennkraftmaschine eines Kraftfahrzeuges, sowie der mit der Brennkraftmaschine verbundenen Vorrichtungen, sowie ein System zur Durchführung des Verfahrens.

Aus der EP 2514 954 B1 ist ein Diagnoseverfahren für eine Dieselkraftmaschine zum Bestimmen, ob die Kraftmaschine oder wenigstens eine mit der Kraftmaschine verbundene Vorrichtung durch eine oder mehrere Fehlfunktionen beeinflusst ist, die auf den Grad der Verschmutzung der durch die Kraftmaschine erzeugten Abgase negative Auswirkungen haben, bekannt. Dieses Diagnoseverfahren analysiert den Pegel des Abgases Kohlendioxid und leitet daraus eine Fehlfunktion der Kraftmaschine ab. Ein weiteres Beispiel ist die WO 02/14828 A2, welche einen automatischen Ablauf der Abgasuntersuchung an Kraftfahrzeugen offenbart.

### Offenbarung der Erfindung

Es ist eine Aufgabe der Erfindung ein Verfahren zur Diagnose einer Brennkraftmaschine eines Kraftfahrzeuges, sowie der mit der Brennkraftmaschine verbundenen Vorrichtungen, sowie ein System zur Durchführung des Verfahrens bereitzustellen. Herkömmliche Diagnoseverfahren basieren nur auf einer Untersuchung der Abgaswerte, wie im Stand der Technik beschrieben. Dieses Vorgehen erlaubt meist nur grobe und schlecht reproduzierbare Aussagen über vorhandenen Fehler und die Komponenten, welche defekt sind. Aus diesem Grund werden im erfindungsgemäßen Verfahren und in der erfindungsgemäßen Vorrichtung durch weitere Messkanäle zusätzliche Informationen über das Fahrzeug bestimmt, so dass verbesserte Diagnoseaussagen möglich sind. Die zusätzlichen Messwerte setzen sich aus Daten, Messwerten und Fehlerinformationen, welche über eine On-Board-Diagnose vom Fahrzeug selber bereitgestellt werden und über eine Schnittstelle durch ein OBD-Messgerät ausgelesen werden können.

Zusätzlich werden Abgaswerte analysiert, welche sowohl Informationen über die Konzentration der gasförmigen Komponenten des Abgases geben und/oder Abgaswerte, welche die Partikel, welche neben den gasförmigen Abgasbestandteilen im Agas enthalten sind, charakterisieren.

Des Weiteren wird ein System aus einem Abgasmessgerät, einem OBD-Messgerät und einer Auswerteeinrichtung zur Diagnose einer Brennkraftmaschine eines Kraftfahrzeuges sowie der mit der Brennkraftmaschine verbundenen Vorrichtungen, auf welchen das erfinderische Verfahren durchführbar ist, beansprucht.

Das erfinderische Verfahren umfasst die Verfahrensschritte gemäß Anspruch 1.

Die Verfahrensschritte werden in Abhängigkeit von mehreren vorgegebenen Zuständen der Brennkraftmaschine durchgeführt, da durch die jeweiligen vorgegebenen Zustände die Brennkraftmaschine in einen Betriebszustand versetzt wird, der eine Aktivierung gewisser Komponenten im Fahrzeug bewirkt. Entsprechen die gesammelten Messwerte (OBD-Messwerte und Abgaswerte) nicht den Erwartungen, kann ein Fehler abgeleitet werden.

Die Fahrzeugidentifikation erfolgt über das OBD-Messgerät , da dies Fehler durch einen Anwender ausschließt und sehr komfortabel ist. Abhängig von der Fahrzeugidentifikatior werden die vorgegebenen Zustände definiert, da dies eine Einstellung von einer Testumgebung abhängig vom jeweiligen Fahrzeug ermöglicht und somit die Aussagefähigkeit der Diagnose erhöht.

Vorteilhafte Testumgebungen lassen sich durch Zustände definieren, bei denen ein Drehzahlverlauf über ein Zeitintervallvorgegeben wird.

Ein weiterer Vorteil ergibt sich, wenn das OBD-Messgerät Informationen über Fehler einer OBD-Analyse an die Auswerteeinrichtung übermittelt da diese Informationen bei der Detektion von Fehlerhaften Komponenten genutzt werden können. Des Weiteren lässt sich durch diese Informationen eine gezieltere und bessere Vorgabe von Zuständen einstellen.

Vorteilhaft ist eine Ermittlung der Motortemperatur und des Lambda-Wertes durch das OBD-Messgerät als erste führende Information, da diese Messwerte eine hohe Aussagekraft über mögliche Defekte in den Komponenten des Fahrzeuges haben.

### Ausführungsbeispiele

Bevorzugte Ausführungsbeispiele der Erfindung sind in der Zeichnung dargestellt und in der nachfolgenden Beschreibung näher erläutert.

Es zeigen:
Figur 1 eine schematische Darstellung eines System aus einem Abgasmessgerät, einem OBD-Messgerät und einer Auswerteeinrichtung mit einem Fahrzeug,
Figur 2 ein Flussablaufdiagramm des erfinderischen Verfahrens gemäß einer ersten Ausführungsform der vorliegenden Erfindung und

### Ausführungsformen der Erfindung

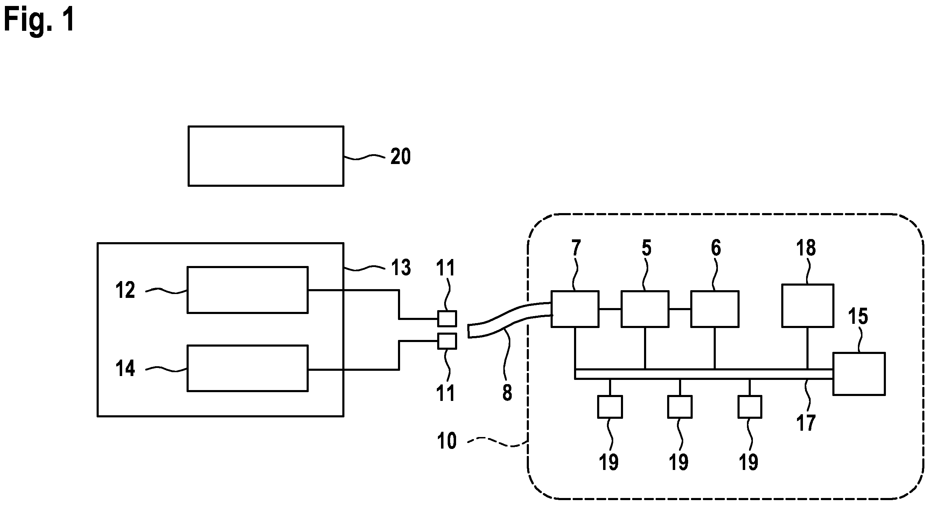

Figur 1 zeigt eine schematische Darstellung eines Systems aus einem Abgasmessgerät 12,13,14, einem OBD-Messgerätes 18 und einer Auswerteeinrichtung 20, wobei das System eine Diagnose einer Brennkraftmaschine 5 eines Kraftfahrzeuges 10, sowie der mit der Brennkraftmaschine 5 verbundenen Vorrichtungen 6,7 durchführt. Das Kraftfahrzeug 10 ist durch die gestrichelte Linie stark vereinfacht dargestellt.

Eine mit der Brennkraftmaschine 5 verbundene Vorrichtung 6 ist ein Motor 6 des Kraftfahrzeuges 10, welcher durch die Brennkraftmaschine 5 angetrieben wird. Der Motor 6 verbrennt eine beliebigen Kraftstoffsorte, insbesondere Diesel, Benzin oder Gas.

Die Brennkraftmaschine 5 ist mit weiteren Vorrichtungen 7 verbunden. Die weiteren mit der Brennkraftmaschine 5 verbundenen Vorrichtungen 7 sind beispielsweise eine Vorrichtung zur Kraftstoffversorgung 7 und /oder eine Vorrichtung zur Luftversorgung 7 und/oder eine Vorrichtung zur Abgasnachbehandlung 7.

Die Vorrichtung zur Kraftstoffversorgung 7 kann beispielsweise mindestens eine Pumpe, einen Kraftstofffilter, einen Kraftstofftank mit Füllstandssensoren, ein Druckbegrenzungsventil, eine Rail, einen Raildrucksensor und mindestens einen Injektor aufweisen.

Die Vorrichtung zur Luftversorgung 7 kann beispielsweise einen Abgasrückführkühler, einen Regelklappe, einen Abgasrückführsteller mit Abgasrückführventil und Positionsmesser, einen Ladeluftkühler mit Bypass,, einen Abgasturbolader, und einen Ladeluftsteller aufweisen.

Die Vorrichtung zur Abgasnachbehandlung 7 kann beispielsweise einen Oxidationskatalysator, einen Partikelfilter (CSF), einen Russsensor, einen Reduktionsmitteltank, eine Reduktionsmittelpumpe, eine Reduktionsmitteldüse, eine Reduktionsmittelförderpump, eine Reduktionsmitteldüse, einen Noₓ-Sensor, einen SCR-Katalysator und einen NH3-Sensor aufweisen.

Die Vorrichtung zur Abgasnachbehandlung 7 ist mit einem Abgasrohr 8, welches Abgase in die Umgebung abgibt, verbunden.

Das Kraftfahrzeug 10 weist des Weiteren mindestens einen Fahrzeugbus 17 auf, welcher mit mindestens einem internen Steuergerät 15 und weiteren Sensoren 19 bzw. Steuereinrichtungen 19 verbunden ist. Durch das Steuergerät 15 und die weiteren Sensoren 19 bzw. Steuereinrichtungen 19 werden Funktionen innerhalb des Kraftfahrzeuges 10 kontrolliert, analysiert und angesteuert.

Der Fahrzeugbus 17 ist auch mit der Brennkraftmaschine 5 und mit den mit der Brennkraftmaschine 5 verbundenen Vorrichtungen 6,7 verbunden. Mit Hilfe des Steuergerätes 15 kann eine On-Board-Diagnose der Brennkraftmaschine 5, sowie der mit der Brennkraftmaschine 5 verbundenen Vorrichtungen 6,7 durchführt werden. Dabei können Werte wie beispielsweise die Temperatur oder die Drehzahl des Motors 6 bestimmt werden. Des Weiteren können beispielsweise die in der folgenden Tabelle dargestellten Messwerte innerhalb einer On-Board-Diagnose bestimmt werden. Das Steuergerät 15 ist über den Fahrzeugbus 17 mit mindestens einer Schnittstelle 16 verbunden. Diese Schnittstelle 16 kann eine OBD-Schnittstelle sein, an welche ein OBD-Messgerät 18 angeschlossen werden kann. Alternativ kann die Schnittstelle 18 auch ein Sendemodul sein, welches eine kabellose Verbindung zu einem OBD-Messgerät 18 oder einem externen Computer 20 aufbauen kann.

Das Abgasmessgerät (12,13,14) analysiert mindestens eines Abgaswertes des Kraftfahrzeuges 10 mit Hilfe einer Sonde 11, die in das Abgasrohr 8 eingeführt wird oder in der Nähe des Abgasrohres 8 platziert wird.

Das erste Abgasmessgerät 12 misst mindestens einen Abgaswert, welche eine Konzentration der gasförmigen Komponente des Abgases beschreibt. Hierbei können die Konzentrationen der Gase CO, HC; 02, NO, CO2 und NO2 erfasst werden. Des Weiteren kann das erste Abgasmessgerät 12 auch den Lambdawert des Abgases bestimmen.

Ein zweites Abgasmessgerät 14 misst mindestens einen Abgaswert, welcher die Partikel, die neben den gasförmigen Komponenten im Abgas enthalten sind, charakterisiert. Dieser Abgaswert kann ein Absorptionskoeffizient sein, welcher im Rahmen einer Trübungsmessung bestimmt wird. Alternativ kann dieser Abgaswert aber auch durch die Partikelgröße und/oder die Partikelanzahl im Abgas charakterisiert werden. Des Weiteren kann das erste Abgasmessgerät 12 auch den Lambdawert des Abgases bestimmen.

Das System zur Diagnose einer Brennkraftmaschine 5 eines Kraftfahrzeuges 10, sowie der mit der Brennkraftmaschine 5 verbundenen Vorrichtungen 6,7 kann entweder das erste Abgasmessgerät 12 oder das zweite Abgasmessgerät 14 oder beide Abgasmessgeräte 12,14 umfassen.

In einer alternativen Ausführungsform, sind das erste Abgasmessgerät 12 und das zweite Abgasmessgerät 14 in einem Universal-Abgasmessgerät 13 enthalten, wobei das Universal-Abgasmessgerät 13 alle Funktionen des ersten Abgasmessgerätes 12 und alle Funktionen des zweiten Abgasmessgerätes 14 aufweist. Das Universal-Abgasmessgerät 13 kann sowohl einen Abgaswert, welche eine Konzentration der gasförmigen Komponente des Abgases beschreibt, als auch einen Abgaswert, welcher eine Konzentration der gasförmigen Komponente des Abgases beschreibt, analysieren.

Des Weiteren weist das System eine Auswerteeinrichtung 20 auf, welche sowohl mit dem Abgasmessgerät 12, 13, 14, als auch mit dem OBD-Messgerät 18 in kabelloser oder kabelgebundener Verbindung steht. Die Auswerteeinrichtung 20 kann auch in das OBD-Messgerät oder in das Abgasmessgerät 12, 13, 14 integriert sein.

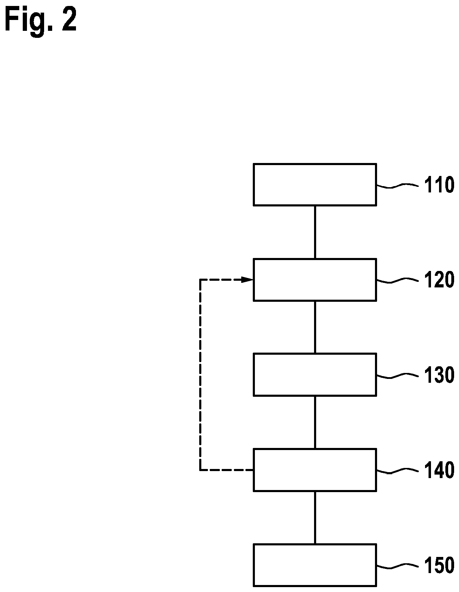

Figur 2 zeigt ein Flussablaufdiagramm, welches das erfindungsgemäße Verfahren beschreibt. Die Verfahrensschritte 110 bis 150 werden bevorzugt durch die Auswerteeinrichtung 20 durchgeführt.

Im Verfahrensschritt 110 findet eine Fahrzeugidentifikation aufgrund von Daten, die die Auswerteeinrichtung 20 von einem OBD-Messgerät 18 empfängt, statt. Das OBD-Messgerät 18 ermittelt im Verfahrensschritt 110 Daten, die im Fahrzeug auf einem Steuergerät 15 oder dem Fahrzeugbus 17 abgelegt sind. Eine Fahrzeugidentifikation kann beispielsweise auf der VIN (Vehikel Identification Number) des Fahrzeuges 10 erfolgen. Des Weiteren kann im Rahmen der Fahrzeugidentifikation auch die EURO-Schadstoffklasse der Fahrzeuges 10 bestimmt werden. Abhängig von der Fahrzeugidentifikation kann eine dynamisch, fahrzeugspezifische Anpassung der Schwellwerte erfolgen.

Im Verfahrensschritt 120 findet aufgrund der Fahrzeugidentifikation eine Festlegung eines Prüfzyklus statt, wobei der Prüfzyklus mehrere vorgegebene Zustände (Phasen) der Brennkraftmaschine 5 umfasst. Ein Zustand (Phase) eines Prüfzyklus kann beispielsweise einen Drehzahlbereich, der innerhalb eines vorgegebenen Zeitintervalls eingehalten werde sollte, umfassen.

Beispiel eines Prüfzyklus:
Phase 1: Drehzahl < 1100rpm ; Dauer t=30s
Phase 2: Drehzahl 3100rpm ; Dauer t=30s
Phase 3: Beschleunigung auf Abregeldrehzahl ; Dauer t=10s
Phase 4: Drehzahl < 1100rpm , Dauer t=30s
Phase 5: Motor aus ; Zündung an; Dauer 30 s

Im Verfahrensschritt 130 werden beim Durchlaufen des Prüfzyklus mindestens ein Abgaswert und mindestens ein OBD-Messwert durch die Auswerteeinrichtung 20 empfangen. Der Abgaswert wird durch mindestens ein Abgasmessgerät 13,14,15 im Verfahrensschritt 130 aus dem Abgas des Fahrzeuges 10 bestimmt. Der OBD-Messwert wird durch das OBD-Messgerät 18 über die Schnittstelle 16 empfangen, wobei der OBD-Messwert im Rahmen einer On-Bord-Diagnose durch das fahrzeuginterne Steuergerät 15 gemessen wurde.

Im Verfahrensschritt 140 wird aus dem mindestens einem Abgaswerte und dem mindestens einen OBD-Messwert durch die Auswerteeinrichtung 20 einer Fehlfunktion, die die Brennkraftmaschine 7 und/oder eine mit der Brennkraftmaschine 7 verbundene Vorrichtung 6 beeinflusst, abgeleitet.

Um die Fehlfunktion mit einer höheren Wahrscheinlichkeit zu verifizieren, können die Verfahrensschritte 120,130 und 140 einmal oder mehrfach wiederholt werden. Dabei wird m Verfahrensschritt 120 meist ein Prüfzyklus festgelegt, der eine geringere Anzahl von Zuständen (Phasen) aufweist. Meist wird die im Beispiel aufgeführte Phase 4 wiederholt.

Im Verfahrensschritt 150 wird anhand der Fehlfunktion eine Defekte Komponente identifiziert. Falls eine eindeutige Identifikation der fehlerhaften Komponente nicht möglich ist, wird eine Priorität festgelegt nach welcher im Rahmen einer nachfolgenden Detailanalyse nach der fehlerhaften Komponente gesucht werden kann. Alternativ wird ein Tauschvorschlag mit einer bestimmten Reihenfolge von möglichen defekten Komponenten definiert.

Im Folgenden werden mögliche Fehlfunktionen, welche sich aus dem mindestens einen Abgaswert und dem mindestens ein OBD-Messwert ableiten lassen, beschrieben.

Fehlfunktion in Vorrichtung zur Luftversorgung:
Im Verfahrensschritt 130 empfängt die Auswerteeinrichtung 20 als OBD-Messwerte die Motortemperatur und die Drehzahl des Fahrzeuges 10. Des Weiteren empfängt die Auswerteeinrichtung 20 als Abgaswerte die Konzentrationen der gasförmigen Komponenten von HC und CO sowie den Lambda-Wert.

Aus einem HC-Wert von 20 ppm bei einer Drehzahl von <1100rpm über eine Dauer von mehr als 10 Sekunden und einer Motortemperatur von über 80 Grad lässt sich eine allgemeine Fehlfunktion im Fahrzeug 10 ableiten. Ist zusätzlich der CO-Wert > 0,01 %vol und Lambda <2 liegt eine Fehlfunktion in der Vorrichtung zur Luftversorgung vor.

Fehlfunktion in Vorrichtung zur Abgasnachbehandlung (DPF):

### a) Dieselpartikelfilters

Im Verfahrensschritt 130 empfängt die Auswerteeinrichtung 20 als OBD-Messwerte die Motortemperatur und die Drehzahl des Fahrzeuges 10. Des Weiteren empfängt die Auswerteeinrichtung 20 als Abgaswerte die Trübung bzw. einen Abgaskoeffizienten. Aus einem Absorptionskoeffizienten der größer als 0,1m⁻¹ ist, einem Drehzahlanstieg von einem Wert <1100rpm auf mindestens 2500rpm innerhalb von 0,5 Sekunden und einer Motortemperatur von über 80 Grad lässt sich eine Fehlfunktion in der Vorrichtung zur Abgasnachbehandlung, insbesondere des Dieselpartikelfilters, ableiten.

### b) Abgastemperatursensor

Im Verfahrensschritt 130 empfängt die Auswerteeinrichtung 20 als OBD-Messwert die Abgastemperatur und die Drehzahl des Fahrzeuges 10. Alternativ kann die Abgastemperatur durch das Abgasmessgerät gemessen werden. Des Weiteren empfängt die Auswerteeinrichtung 20 als Abgaswerte den Lambda-Wert, die Konzentration des NO im Abgas und die Trübung bzw. einen Abgaskoeffizienten.

Falls im Rahmen der Fahrzeugidentifikation im Verfahrensschritt 110 ein Fahrzeug 10 ohne SCR (Selective catalytic reduction) identifiziert wurde, kann folgender Fehler vorliegen: Ist in der Phase 4 ein Anstieg der Konzentration von NO bei einem Lambda-Wert >2 und einem Absorptionskoeffizienten von >= 0,1m⁻¹ ohne einen signifikanten Temperaturanstieg erkennbar, so lässt sich daraus ein Defekt des Abgastemperatursensors ableiten.

### c) Abgasregelventil

Im Verfahrensschritt 130 empfängt die Auswerteeinrichtung 20 als OBD-Messwerte die Abgastemperatur und die Drehzahl des Fahrzeuges 10. Alternativ kann die Abgastemperatur durch das Abgasmessgerät gemessen werden. Des Weiteren empfängt die Auswerteeinrichtung 20 als Abgaswerte den Lambda-Wert, die Konzentration des NO und des O₂ im Abgas und die Trübung bzw. den Abgaskoeffizienten..

Falls im Rahmen der Fahrzeugidentifikation im Verfahrensschritt 110 ein Fahrzeug 10 ohne SCR (Selective catalytic reduction) identifiziert wurde, kann folgender Fehler vorliegen: Zeigt sich in der EGR-Rate eine signifikante Veränderung aber keine entsprechende signifikante Änderung in den Abgaskonzentrationen, z.b. NO im entsprechenden Drehzahlbereich und Abgastemperaturbereich, so ist das ein Zeichen eines festsitzenden Abgasregelventils.

In den genannten Beispielen kann die Phase in der die Messungen stattfinden mehrmals wiederholt werden, um die Ergebnisse zu verifizieren und einen Fehler in der Messung und der daraus folgenden Fehlerableitung auszuschließen.

## Patentansprüche

1. Verfahren zur Diagnose einer Brennkraftmaschine (7) eines Kraftfahrzeuges (10) sowie der mit der Brennkraftmaschine (10) verbundenen Vorrichtungen (6), mit den Verfahrensschritten:
- Durchführen einer Fahrzeugidentifikation aufgrund von Daten, die die Auswerteeinrichtung (20) von einem OBD-Messgerät (18) empfängt, wobei die Daten im Fahrzeug auf einem Steuergerät (15) oder dem Fahrzeugbus (17) abgelegt sind,
- Festlegen eines Prüfzyklus aufgrund der Fahrzeugidentifikation, wobei der Prüfzyklus mehrere vorgegebene Zustände (Phasen) der Brennkraftmaschine (5) umfasst,
- Analysieren mindestens eines Abgaswertes durch ein Abgasmessgerät (13,14,15),
- Bestimmen mindestens eines OBD-Messwertes, welcher im Rahmen einer On-Bord-Diagnose durch ein fahrzeuginternes Steuergerät (15) analysiert wird, durch das OBD-Messgerät (18),
- Übermitteln des mindestens einen Abgaswertes und des mindestens einen OBD-Messwertes an eine Auswerteeinrichtung (20),
- Ableiten einer Fehlfunktion, die die Brennkraftmaschine (7) und/oder eine mit der Brennkraftmaschine (7) verbundene Vorrichtung (6) beeinflusst, aus dem mindestens einem Abgaswerte und dem mindestens OBD- Messwert durch die Auswerteeinrichtung (20).

2. Verfahren nach Anspruch 1, wobei der Abgaswert eine Konzentration einer gasförmigen Komponente des Abgases ist.

3. Verfahren nach Anspruch 1 oder 2, wobei der Abgaswert durch die Partikelgröße und/oder Partikelanzahl im Abgas charakterisiert wird.

4. Verfahren nach Anspruch 1 oder 2, wobei der Abgaswert ein Absorptionskoeffizient ist, welcher im Rahmen einer Trübungsmessung bestimmt wird.

5. Verfahren nach einem der vorherigen Ansprüche, wobei die Verfahrensschritte in Abhängigkeit von mehreren vorgegebenen Zuständen der Brennkraftmaschine (7) durchgeführt werden.

6. Verfahren nach Anspruch 5, wobei der vorgegebene Zustand durch Vorgabe eines Drehzahlverlaufs über ein Zeitintervall definiert wird.

7. Verfahren nach einem der vorherigen Ansprüche, wobei das OBD-Messgerät (18) Informationen über Fehler einer OBD-Analyse an die Auswerteeinrichtung (20) übermittelt.

8. Verfahren nach einem der vorherigen Ansprüche, wobei das OBD-Messgerät (20) als erste führende Information immer die Motortemperatur und den Lambda-Wert ermittelt.

9. System aus einem Abgasmessgerät (12,13,14), einem OBD-Messgerät (18) und einer Auswerteeinrichtung (20) zur Diagnose einer Brennkraftmaschine (7) eines Kraftfahrzeuges (10) sowie der mit der Brennkraftmaschine (7) verbundenen Vorrichtungen (6), **dadurch gekennzeichnet, dass** durch das System ein Verfahren nach einem der Ansprüche 1 bis 8 durchgeführt wird.

## Claims

1. Method for diagnosing an internal combustion engine (7) of a motor vehicle (10) and the apparatuses (6) connected to the internal combustion engine (10), comprising the method steps of:
- carrying out a vehicle identification operation on the basis of data which the evaluation device (20) receives from an OBD measurement unit (18), wherein the data is stored in the vehicle in a control unit (15) or the vehicle bus (17),
- establishing a test cycle on the basis of the vehicle identification operation, wherein the test cycle comprises a plurality of prespecified states (phases) of the internal combustion engine (5),
- analysing at least one exhaust gas value using an exhaust gas measurement unit (13, 14, 15),
- determining at least one OBD measurement value, which is analysed as part of an on-board diagnosis operation by a vehicle-internal control unit (15), using the OBD measurement device (18),
- transmitting the at least one exhaust gas value and the at least one OBD measurement value to an evaluation device (20),
- deriving a malfunction, which influences the internal combustion engine (7) and/or an apparatus (6) connected to the internal combustion engine (7), from the at least one exhaust gas value and the at least one OBD measurement value using the evaluation device (20).

2. Method according to Claim 1, wherein the exhaust gas value is a concentration of a gaseous component of the exhaust gas.

3. Method according to Claim 1 or 2, wherein the exhaust gas value is **characterized by** the size of particles and/or number of particles in the exhaust gas.

4. Method according to Claim 1 or 2, wherein the exhaust gas value is an absorption coefficient which is determined as part of a turbidity measurement.

5. Method according to one of the preceding claims, wherein the method steps are carried out depending on a plurality of prespecified states of the internal combustion engine (7).

6. Method according to Claim 5, wherein the prespecified state is defined by prespecifying a rotation speed profile over a time interval.

7. Method according to one of the preceding claims, wherein the OBD measurement unit (18) transmits information about faults in an OBD analysis to the evaluation device (20).

8. Method according to one of the preceding claims, wherein the OBD measurement unit (20) always determines the engine temperature and the lambda value as the first guiding information.

9. System comprising an exhaust gas measurement unit (12, 13, 14), an OBD measurement unit (18) and an evaluation device (20) for diagnosing an internal combustion engine (7) of a motor vehicle (10) and the apparatuses (6) connected to the internal combustion engine (7), **characterized in that** a method according to one of Claims 1 to 8 is carried out by the system.

## Revendications

1. Procédé de diagnostic d'un moteur à combustion interne (7) d'un véhicule automobile (10), ainsi que dispositifs (6) associés au moteur à combustion interne (10), comprenant les étapes de procédé consistant à :
- effectuer une identification de véhicule sur la base de données que le dispositif d'évaluation (20) reçoit d'un appareil de mesure OBD (18), les données étant sauvegardées dans le véhicule sur un appareil de commande (15) ou le bus de véhicule (17),
- fixer un cycle de contrôle sur la base de l'identification de véhicule, le cycle de contrôle comprenant plusieurs états (phases) spécifiés du moteur à combustion interne (5),
- analyser au moins une valeur de gaz d'échappement par un appareil de mesure de gaz d'échappement (13, 14, 15),
- déterminer par l'appareil de mesure OBD (18) au moins une valeur de mesure OBD qui est analysée dans le cadre d'un diagnostic à bord par un appareil de commande (15) interne au véhicule,
- transmettre ladite au moins une valeur de gaz d'échappement et ladite au moins une valeur de mesure OBD à un dispositif d'évaluation (20),
- déduire par le dispositif d'évaluation (20) un dysfonctionnement qui affecte le moteur à combustion interne (7) et/ou un dispositif (6) associé au moteur à combustion interne (7) à partir de ladite au moins une valeur de gaz d'échappement et de ladite au moins une valeur de mesure OBD.

2. Procédé selon la revendication 1, dans lequel la valeur de gaz d'échappement est une concentration d'une composante gazeuse du gaz d'échappement.

3. Procédé selon la revendication 1 ou 2, dans lequel la valeur de gaz d'échappement est **caractérisée par** la taille de particule et/ou le nombre de particules dans le gaz d'échappement.

4. Procédé selon la revendication 1 ou 2, dans lequel la valeur de gaz d'échappement est un coefficient d'absorption qui est déterminé dans le cadre d'une mesure de turbidité.

5. Procédé selon l'une quelconque des revendications précédentes, dans lequel les étapes de procédé sont effectuées en fonction de plusieurs états spécifiés du moteur à combustion interne (7).

6. Procédé selon la revendication 5, dans lequel l'état spécifié est défini par la spécification d'une courbe de vitesse de rotation pendant un intervalle de temps.

7. Procédé selon l'une quelconque des revendications précédentes, dans lequel l'appareil de mesure OBD (18) transmet au dispositif d'évaluation (20) des informations concernant des erreurs d'une analyse OBD.

8. Procédé selon l'une quelconque des revendications précédentes, dans lequel l'appareil de mesure OBD (20) établit comme une première information dominante toujours la température du moteur et la valeur lambda.

9. Système composé d'un appareil de mesure de gaz d'échappement (12, 13, 14), d'un appareil de mesure OBD (18) et d'un dispositif d'évaluation (20), destiné au diagnostic d'un moteur à combustion interne (7) d'un véhicule automobile (10) ainsi que des dispositifs (6) associés au moteur à combustion interne (7), **caractérisé en ce que** le système exécute un procédé selon l'une quelconque des revendications 1 à 8.
